# EUROPÄISCHE PATENTSCHRIFT

(11) **EP 1 530 996 B1**
(45) Veröffentlichungstag und Bekanntmachung des Hinweises auf die Patenterteilung: **07.08.2013**
(21) Anmeldenummer: 05000833.3
(22) Anmeldetag: 12.11.1997
(51) Int. Cl.: B01D 63/02, B01D 65/00

(54) **Hohlfasermembrantrennvorrichtung**
Hollow fiber membrane separation device
Dispositif de séparation ayant une membrane de fibre creuse

(30) Priorität: 21.11.1996 DE 19648275; 21.11.1996 DE 19648276; 26.06.1997 DE 19727250; 07.10.1997 DE 19744336
(43) Veröffentlichungstag der Anmeldung: 18.05.2005
(62) Teilanmeldung aus: 03008579.9
(73) Patentinhaber: Fresenius Medical Care Deutschland GmbH, 61352 Bad Homburg v.d.H. (DE)
(72) Erfinder: Hahmann, Uwe, D-76448 Durmersheim (DE); Heilmann, Klaus, 66606 St. Wendel (DE); Schönhofen, Michael, Dr., 66606 St. Wendel (DE); Wiesen, Gerhard, D-61352 Bad Homburg (DE)
(74) Vertreter: Laufhütte, Dieter

(56) Entgegenhaltungen:
- EP-A- 0 305 687
- DE-A- 2 646 358
- DE-A- 4 036 978
- JP-A- 60 068 006
- US-A- 4 640 773

## Beschreibung

Die Erfindung betrifft eine Hohlfasermembrantrennvorrichtung, die verkürzt auch als Hohlfasermembrantrennvorrichtung bezeichnet wird, nach dem Oberbegriff des Anspruchs 1.

Aus der DE-OS 46 358 ist eine Hohlfasermembrantrennvorrichtung bekannt, bei der das Hohlfaserbündel ringartig ein zentrales Rohr einfaßt und die Enden des ringförmigen Hohlfaserbündels durch eine Vergußmasse sowohl gegenüber dem zentralen Rohr als auch gegenüber dem dieses konzentrisch einfassenden Gehäusemantel abgedichtet sind.

Eine andere bekannte Hohlfasermembrantrennvorrichtung besteht ebenfalls aus einem rohrförmigen Gehäuse, das das Hohlfaserbündel einfaßt, wobei die Enden des Hohlfaserbündels durch eine Vergußmasse mit den Enden des rohrförmigen Gehäuses verbunden sind. Bei dieser Hohlfasermembrantrennvorrichtung ist das Gehäuse jeweils angrenzend an die Vergußmassen mit radialen Anschlußstutzen versehen, die die Ein- und Ausgänge zu dem zweiten Strömungsraum bilden. Zur Öffnung der von den Vergußmassen eingefaßten Kapillarröhren des Hohlfaserbündels werden diese an ihren Stirnseiten angeschnitten. Auf die Enden des rohrförmigen Mantels werden sodann dichtend Kappen aufgesetzt, die mit Stutzen versehen sind, die die Ein- und Ausgänge des ersten Strömungsraums bilden.

Diese bekannten Hohlfasermembrantrennvorrichtungen werden beispielsweise als Kapillardialysatoren eingesetzt, wobei die durch die Kapillarröhren-Durchgänge gebildeten Strömungsräume den Blutraum und das die Hohlfaserbündel einfassende Gehäuse den Dialysatraum bilden, in dem die Hohlfasern von dem Dialysat umspült werden.

Bei den bekannten Hohlfasermembrantrennvorrichtungen besteht das Problem, daß die üblicherweise aus PU bestehende Vergußmasse, die scheibenförmig aushärtet und eine Abdichtung zwischen den beiden Strömungsräumen bildet, bei ihrer Aushärtung schrumpft, so daß sich in den durch die Vergußmassen gebildeten scheibenförmigen Abdichtungen Spannungen ausbilden, die zu Rissen und auch zu Ablösungen der Vergußmassen von dem diese einfassenden Gehäusemantel führen können. Die Folge ist, daß die beiden Strömungsräume nicht mehr vollständig gegeneinander abgedichtet sind und daß die die Dichtung bewirkende Adhäsion der Dichtungsmassen zu dem das Faserbündel einfassenden Gehäuse nicht mehr mit Sicherheit gewährleistet ist.

Bei einer aus EP 0 305 687 B1 bekannten Hohlfasermembrantrennvorrichtung der eingangs angegebenen Art sind die scheibenförmigen Vergußmassen von zwischengeschalteten Ringen eingefaßt, an denen die Vergußmassen nicht haften, so daß diese spannungsfrei schrumpfen können. Durch dieses spannungsfreie Schrumpfen werden Risse in den scheibenförmigen Vergußmassen verhindert und auf eine unmittelbare Abdichtung zwischen dem Umfangsrand der Vergußmassen und dem diese einfassenden Gehäuse wird verzichtet. Um dennoch eine Abdichtung zwischen den beiden Strömungsräumen zu erhalten, ist der erste Raum durch auf die Vergußmasse aufgesetzte Kappen durch über den Randbereich der Vergußmasse verlaufenden Dichtungen, gegen die die Kappen angedrückt sind, abgedichtet.

Bei dieser bekannten Hohlfasermembrantrennvorrichtung besteht nun das Problem, eine Verbindung zu dem zweiten Raum zu schaffen, der durch das das Faserbündel einfassende Gehäuse gebildet ist. Diese Verbindung wird bei der bekannten Hohlfasermembrantrennvorrichtung dadurch geschaffen, daß das rohrförmige Gehäuse an seinen Endbereichen in seinem Durchmesser etwa muffenartig verbreitert ist, wobei diese Verbreiterungen mit radialen Anschlußstutzen versehen sind. Diese Anschlußstutzen münden in den durch das Gehäuse gebildeten zweiten Raum, wobei die verbreiterten Abschnitte des Gehäuses gegenüber dem ersten Raum dadurch abgedichtet sind, daß die Kappen dichtend an die verbreiterten Abschnitte anschließen, so daß durch den Kappenrand eine Abdichtung nach außen und durch den umlaufenden Dichtungsring eine Abdichtung gegenüber dem ersten Raum geschaffen ist. Diese Art der Anordnung der Anschlußstutzen an den durch das Gehäuse gebildeten zweiten Raum ist verhältnismäßig aufwendig. Außerdem kommt es zu schlecht durchspülten Toträumen oberhalb bzw. unterhalb der Anschlußstutzen, an denen sich Gasblasen sammeln können. Dies kann sich nachteilig bei der Desinfektion oder Sterilisation sowie allgemein bei der Handhabung auswirken.

Die DE 40 36 978 A1 offenbart zwei- bzw. dreiteiliges Filtermodul, die ein Membranfiltermodul mit frei liegenden verschweißten Hohlfaserbündelenden aufweist. Diese Vorrichtung ermöglicht jedoch keine vollständige Befüllung und Entlüftung des gebildeten Filtratraumes. Gleiches gilt für die offenbarte Ausführungsform der JP 60 068006 A, die ebenfalls keine vollständige Be- und Entlüftung zulässt.

Aus der US 4,640,773 ist eine Filtervorrichtung bekannt, bei der die Endkappen direkt mit dem Gehäuse der Filtervorrichtung verklebt werden.

Aufgabe der Erfindung ist es daher, eine Hohlfasermembrantrennvorrichtung der eingangs angegebenen Art zu schaffen, bei der einerseits mit Sicherheit gewährleistet ist, daß die beiden Strömungsräume durch die ausgehärteten Vergußmassen gegeneinander abgedichtet sind, und andererseits eine einfache Anordnung der Anschlußstutzen für den zweiten Strömungsraum geschaffen ist. Erfindungsgemäß wird diese Aufgabe bei einer Hohlfasermembrantrennvorrichtung der eingangs angegebenen Art durch die kennzeichnenden Merkmale des Patentanspruchs 1 gelöst.

Bei der erfindungsgemäßen Hohlfasermembrantrennvorrichtung werden die Vergußmassen in diese stirnseitig und an ihren Seiten einfassenden Formen ausgehärtet, so daß die Vergußmassen spannungsfrei schrumpfen können. Die Dichtung zwischen den so gebildeten scheibenförmigen Vergußmassen und den ersten Kappen wird, wie bei der bekannten Hohlfasermembrantrennvorrichtung, durch eingelegte Dichtungsmittel bewirkt. Um einen einfachen Zugang zu dem zweiten Strömungsraum zu schaffen, sind die entsprechenden Anschlußstutzen aber nicht mehr an dem Gehäuse selbst, sondern an der zweiten, die erste Kappe übergreifenden Kappe angeordnet. Dies führt zu einer Vereinfachung der Hohlfasermembrantrennvorrichtung.

Zweckmäßigerweise überragen die inneren Ränder der die Vergußmassen übergreifenden zweiten Kappen die Vergußmassen nach innen hin, so daß zwischen der Umfangswandung der zweiten Kappen und den Vergußmassen bzw. den von diesen eingefaßten Faserbündeln ein Strömungsraum geschaffen ist.

Nach einer bevorzugten Ausführungsform ist vorgesehen, daß das rohrabschnittförmige Gehäuse, in das das Hohlfaserbündel eingezogen ist, an den Enden seines Mantels mit durch frei auslaufende, axiale Kerben oder Einschnitte gebildeten zahnoder zinnenartigen Vorsprüngen versehen ist, deren äußeren Bereiche in die Vergußmassen eingebunden sind, so daß die freien inneren Bereiche der Kerben oder Einschnitte Durchflußöffnungen für die Flüssigkeit bilden. Da das rohrabschnittförmige oder vorzugsweise mit einem kreisrunden Querschnitt versehene Gehäuse aus einem Material mit elastischen Eigenschaften, beispielsweise PC, besteht, sind durch die Kerben oder Einschnitte aus federnden Zungen bestehende kranzförmige Ränder gebildet, die von der Vergußmasse zumindest teilweise eingefaßt sind. Härtet sodann die Vergußmasse zu den Scheiben aus, können diese im wesentlichen spannungsfrei schrumpfen, weil die federnden Zungen diesem Schrumpfen keinen nennenswerten Widerstand entgegensetzen. Nach dieser erfindungsgemäßen Ausgestaltung sind die durch die Vergußmassen gebildeten Scheiben fest mit den Enden des rohrförmigen Gehäuses verbunden, so daß sich sodann durch die beiden einander übergreifenden Kappen mit den entsprechenden Dichtungsmitteln die beiden Strömungsräume sicher voneinander trennen lassen.

Die aus EP 0 305 387 B1 bekannte Hohlfasermembrantrennvorrichtung weist zwar ein rohrförmiges Gehäuse auf, bei dem in den verbreiterten Endabschnitten durch Kerben oder Einschnitte gebildete kranzförmige Ränder geschaffen sind, die teilweise von den zu Scheiben ausgehärteten Vergußmassen eingefaßt sind. Diese aus rechteckigen Vorsprüngen bestehenden kranzförmigen Ränder bedingen aber eine komplizierte Ausgestaltung der Gehäuse, weil diese zusätzlich noch von den verbreiterten Endabschnitten des Gehäuses eingefaßt sind, die mit den Anschlußstutzen versehen sind.

Zweckmäßigerweise ist das Gehäuse im Bereich der inneren Enden der Vorsprünge mit radialen Flanschen versehen, auf denen sich die Ränder der zweiten Kappen dichtend abstützen oder an denen diese befestigt sind.

Zweckmäßigerweise ist der Abstand der Vorsprünge in Umfangsrichtung voneinander größer als deren Breite.

Ein Ausführungsbeispiel der Erfindung wird nachstehend anhand der Zeichnung näher erläutert. In dieser zeigt
- Fig. 1:: einen Längsschnitt durch eine Seite einer nicht erfindungsgemäβen Hohlfasermembrantrennvorrichtung
- Fig. 2 bis 4:: Schnitte durch die Stirnseite einer durch die Vergußmasse gebildeten Scheibe,
- Fig. 5:: einen Längsschnitt durch das Gehäuse einer bekannten Hohlfasermembrantrennvorrichtung nach dem Stand der Technik,
- Fig. 6:: einen Schnitt durch den oberen Bereich des Gehäuses einer nicht erfindungsgemäβen Hohlfasermembrantrennvorrichtung mit geschlossenem Ringraum,
- Fig. 7:: eine Seitenansicht der erfindungsgemäßen Hohlfasermembrantrennvorrichtung und
- Fig. 8:: einen Schnitt durch die Hohlfasermembrantrennvorrichtung nach Fig. 7.

Die nicht erfindungsgemäße Hohlfasermembrantrennvorrichtung 1 besteht aus einem rohrabschnittförmigen Gehäuse 2 aus Kunststoff, beispielsweise PC, dessen Ränder zu einem radialen ringförmigen Flansch 3 auslaufen. Mit dem inneren Randbereich dieses Flansches 3 oder dem Übergangsbereich zwischen dem zylindrischen Rohrteil und dem Flansch ist mit dem Gehäuse ein zylindrischer Ring verbunden, der mit Einschnitten 5 versehen ist, die rechteckige, frei auslaufende Kerben bilden. Zwischen diesen Kerben 5 sind zinnen- oder zungenartige, ebenfalls im wesentlichen rechteckige und sich in axialer Richtung erstreckende Vorsprünge 4 gebildet. Diese Vorsprünge 4 weisen an ihren oberen äußeren Endbereichen radial nach außen weisende Vorsprünge 6 auf.

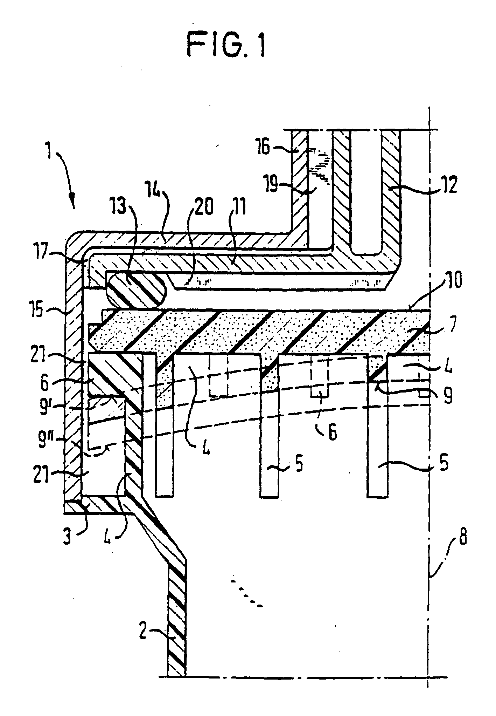

In das rohrförmige Gehäuse 2 ist ein Hohlfaserbündel eingebracht. Die Enden dieses Hohlfaserbündels sind in einer beispielsweise aus PU bestehenden Vergußmasse 7 eingebettet, die nach ihrer Aushärtung scheibenförmig ist. Da die Vergußmasse während ihrer Aushärtung mit um eine rechtwinkelig auf der Gehäuseachse 8 stehenden Rotationsachse zentrifugiert wird, besitzt die Scheibe 7 in der aus Fig. 1 ersichtlichen Draufsicht eine zylinderschalenförmige Innenseite 9. Die Aushärtung erfolgt in einer mitrotierenden Kappe, die die Stirnseite und die Umfangsseite begrenzt. Der Toleranzbereich, in dem sich die zylinderschalenförmige Innenseite 9 bewegen kann, ist durch die gestrichelten Linien 9' und 9" angedeutet.

Nach dem Aushärten der Vergußmasse wird die Scheibe 7 an ihrer Stirnseite 10 angeschnitten, so daß die Kapillarröhrchen des in die Vergußmasse eingebetteten Hohlfaserbündels geöffnet werden.

Auf die Stirnseite 10 der Scheibe 7 wird dann eine erste Kappe 11 mit zentralem Anschlußstutzen 12 aufgelegt, die an ihrem Randbereich durch einen O-Ring 13 gegenüber dem von Hohlfasern freien Randbereich der Scheibe 7 abgedichtet ist.

Die erste Kappe 11 ist von einer zweiten Kappe 14 mit zylindrischer Wandung 15 eingefaßt, deren Randbereich mit dem äußeren Rand des Ringflansches 3 flüssigkeitsdicht verbunden ist. Die zweite Kappe 14 besitzt einen zentralen zylindrischen, einen Anschlußstutzen bildenden Fortsatz 16, der den doppelwandig ausgebildeten Anschlußstutzen 12 der ersten Kappe 11 konzentrisch einfaßt. Die zweite Kappe 14 ist auf ihrer Innenseite strahlenförmig mit Stegen 17 versehen, die den erforderlichen Abstand zu der ersten Kappe 11 gewährleisten und damit Strömungskanäle begrenzen. Auch der zylindrische Fortsatz 16 ist auf seiner Innenseite mit radialen Stegen 19 versehen, die sich auf den äußeren Mantel des Stutzens 12 abstützen und Durchflußkanäle begrenzen.

Die erste Kappe 11 ist auf ihrer Unterseite stemförmig mit radialen Stegen 20 versehen, die der Aussteifung dienen.

Die zweite Kappe 14 faßt mit ihrem zylindrischen Rand 15 die Scheibe 7 und die zinnen- oder zahnförmigen Fortsätze 4 mit radialem Abstand ein, so daß ein Ringraum 21 gebildet ist, durch den die durch den Stutzen 16 eingeleitete Flüssigkeit durch die inneren Bereiche der Schlitze 5 in den das Hohlfaserbündel einfassenden Strömungsraum eintreten kann.

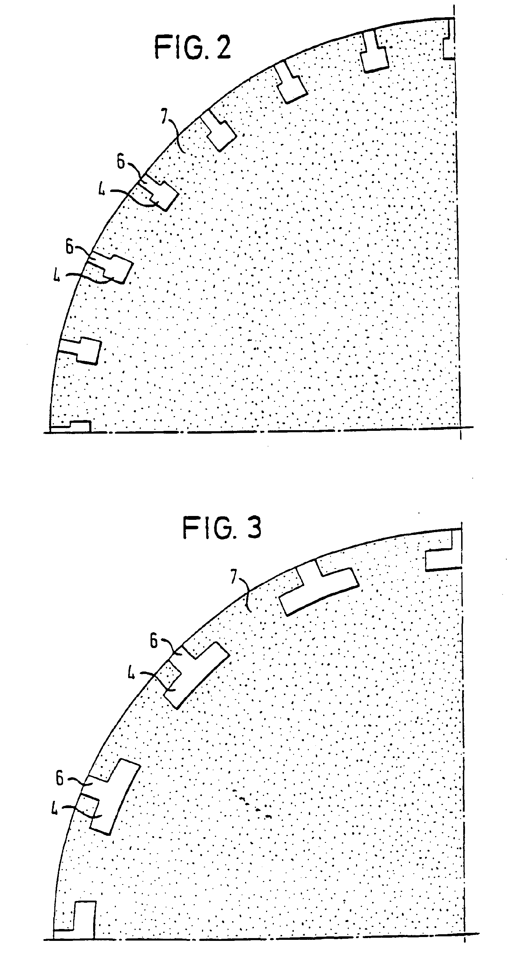

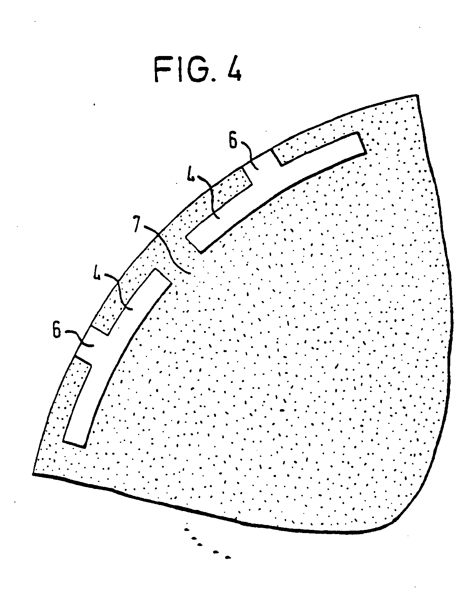

Wie aus den Fig. 2 bis 4 ersichtlich ist, können die zahn- oder zinnenartigen Vorsprünge 4 und die zwischen diesen gebildeten Spalte 5 unterschiedliche Längen bzw. Umfangswinkel einschließen. Auch die nasenförmigen radialen Vorsprünge 6 können unterschiedlich lang und breit ausgebildet sein.

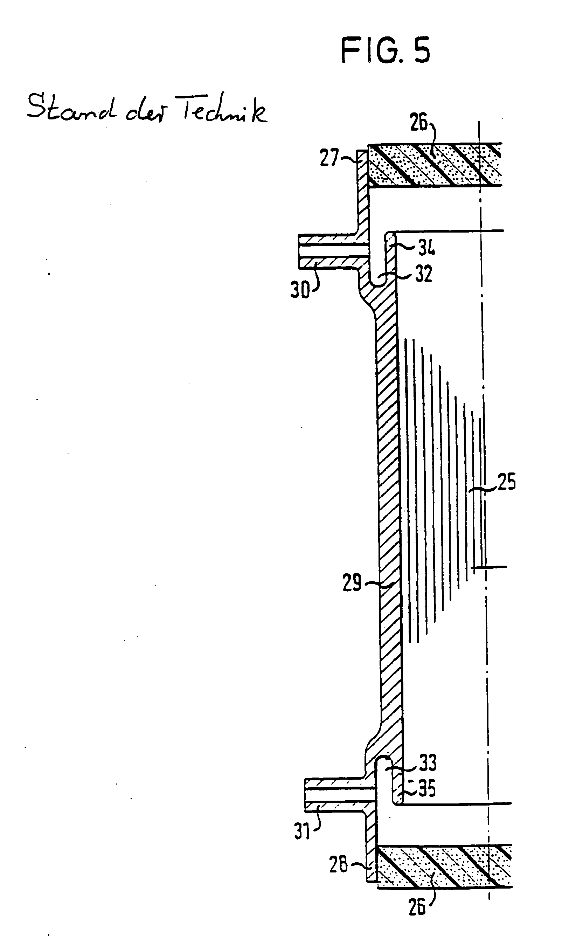

Aus Fig. 5 ist ein Längsschnitt durch das Gehäuse eines bekannten Dialysators ersichtlich. Bei diesem bekannten Dialysator sind die Enden des Hohlfaserbündels 25 von den zu Scheiben 26 ausgehärteten Vergußmassen eingefaßt, die mit den äußeren Rändern 27, 28 des Gehäuses 29 feste Verbindungen eingehen. Im Abstand von den Scheiben 26 ist das Gehäuse mit radialen Stutzen 30, 31 versehen, die in rinnenförmige Ringräume 32, 33 münden, die in der dargestellten Weise durch innere frei auslaufende ringförmige Wandungsabschnitte 34, 35 gebildet sind, deren Ränder im axialen Abstand vor den Scheiben enden. Wird bei senkrecht stehendem Gehäuse beispielsweise in den unteren radialen Stutzen 31 eine Flüssigkeit beziehungsweise Dialysat in den das Hohlfaserbündel 25 aufnehmenden Raum eingeleitet, neigt die Flüssigkeit dazu, hauptsächlich in Bereichen, die nahe an dem Stutzen 31 liegen, über den Rand der die Ringnut 33 begrenzenden Wandung 35 zu treten, so daß sich in dem Gehäuse 29 eine unsymmetrische Flüssigkeits- bzw. Dialysatströmung ausbildet.

Diese unsymmetrische Strömung wird bei der anhand der Fig. 1 bis 4 erläuterten Hohlfasermembrantrennvorrichtung dadurch vermieden, daß die Flüssigkeit bzw. das Dialysat sich in dem Ringraum 21 verteilt und dann im wesentlichen mit gleicher Umfangsverteilung durch die inneren freien Bereiche der Eintrittsschlitze 5 in den das Hohlfaserbündel einschließenden Raum eintritt. Im dargestellten Ausführungsbeispiel wird der Ringraum 21 nach außen hin durch die zylindrische Wand der Kappe 15 begrenzt, wobei die Kappe mit einem axialen konzentrisch angeordneten Einlaßstutzen versehen ist, so daß sich die Flüssigkeit mit gleichem Druck in dem Ringraum 21 verteilt. Da sich über den Umfang des Ringraums 21 ein im wesentlichen gleicher Druck der Flüssigkeit einstellt, können die durch die freien Bereiche der Eintrittsschlitze 5 gebildeten Eintrittsöffnungen auch gleiche Querschnitte aufweisen.

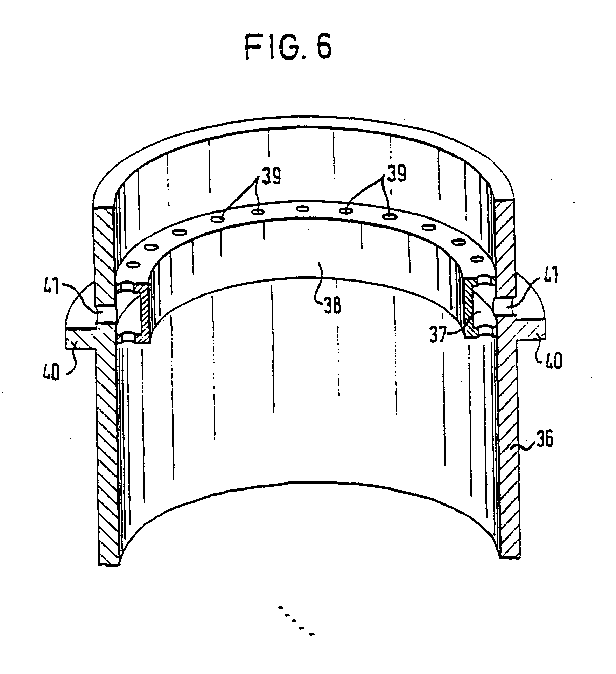

Bei dem Vergleichsbeispiel nach Fig. 6 tritt die Flüssigkeit bzw. das Dialysat durch radiale Bohrungen 41 des rohrabschnittförmigen Gehäuses 36 in einen Ringraum 37 ein, der durch einen U-förmigen Ring 38 gebildet ist, dessen nach außen weisenden Schenkel flüssigkeitsdicht mit dem Gehäusemantel verbunden sind. Der U-förmige Ring 38 ist in seinen Schenkeln mit gleichmäßig über den Umfang verteilten Bohrungen 39 versehen, durch das die in den Ringraum 37 eingeleitete Flüssigkeit in die das Hohlfaserbündel enthaltende Kammer eintreten kann.

Das rohrabschnittförmige Gehäuse ist im Bereich der Unterseite des Ringraums mit einem äußeren radial umlaufenden Flansch 40 versehen, auf den in entsprechender Weise wie bei der anhand der Fig. 1 bis 4 beschriebenen Vorrichtung der Rand einer Kappe aufgesetzt werden kann, so daß zwischen deren zylindrischen Umfangswandung und dem oberen Teil des Gehäuses 6 ein Ringraum gebildet ist, durch den mit gleicher Druckverteilung Flüssigkeit zu dem über den Umfang des Gehäuses verteilten radialen Bohrungen 35 geleitet werden kann.

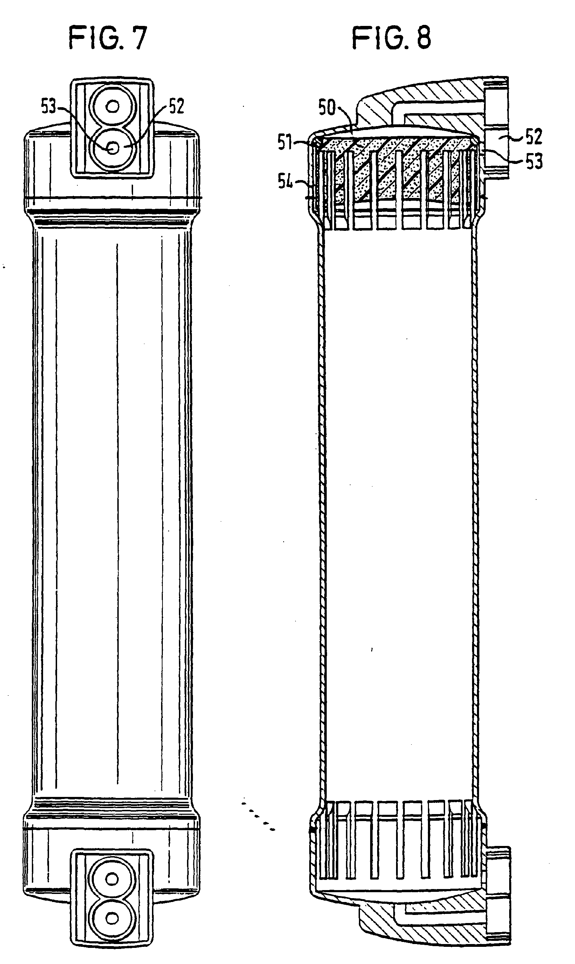

Aus Fig. 7 ist eine Seitenansicht einer erfindungsgemäßen Hohlfasermembrantrennvorrichtung, im dargestellten Fall eines Dialysators, ersichtlich. Bei diesem Dialysator befinden sich die der Konnektierung mit den Tüllen eines Dialysegeräts dienenden Anschlüsse bzw. Anschlußstutzen auf einer Seite und weisen zueinander parallele Mittellinien auf, so daß sie unmittelbar oder durch eine geeignete Vorrichtung dichtend auf die Tüllen der Dialysevorrichtung aufgedrückt werden können.

Bei der aus den Fig. 7 und 8 ersichtlichen Hohlfasermembrantrennvorrichtung bestehen die oberen und unteren mit den Anschlüssen bzw. Anschlußstutzen versehenen Kappen aus getrennt im Spritzgießverfahren hergestellten Teilen, deren Ränder durch geeignete Schweiß- oder Klebverbindungen stumpf und flüssigkeitsdicht mit den glockenförmig nach außen erweiterten Rändern des Gehäuses verbunden sind.

Wie aus Fig. 8 ersichtlich ist, ist der Blutraum und der die nicht dargestellten Hohlfasern umgebende Dialysatraum durch eine Vergußmasse 50 getrennt. Die Vergußmasse weist an ihrem oberen Randbereich eine umlaufende Ausnehmung aus, in die ein O-Ring 51 zur Abdichtung des Blutraums gegenüber dem Dialysatraum eingelegt ist.

Wie aus Fig. 8 ersichtlich ist, schließt der in den Stutzen 52 mündende Durchbruch 53 unmittelbar an die Unterseite des O-Rings 51 an, wobei sich der Ringraum 54, der der Zu- bzw. Abführung des Dialysats dient, bis an die O-Dichtung erstreckt, so daß kein Totraum vorhanden ist, in dem sich Luftblasen sammeln könnten.

## Patentansprüche

1. Hohlfasermembrantrennvorrichtung mit zwei Strömungsräumen, von denen ein erster Raum, vorzugsweise ein Permeatraum, durch die Röhren- oder Kapillarröhren-Durchgänge eines an seinen Enden in eine Vergußmasse eingegossenen Hohlfaserbündels und ein zweiter Raum, vorzugsweise ein Filtratraum, durch ein das Hohlfaserbündel einfassendes Gehäuse gebildet ist, der durch die Vergußmasse (50) gegenüber den Ein- und Ausgängen der Röhren des Hohlfaserbündels abgedichtet ist, und
mit mindestens zwei Anschlußstutzen zum Zu- und Abführen von Flüssigkeiten in bzw. aus jedem der beiden Räume, von denen der mindestens eine Anschlußstutzen des zweiten Raums in einem zwischen dem Gehäuse und dem Bereich eines Endes des Hohlfaserbündels gebildeten Ringraum (54) mündet,
**dadurch gekennzeichnet,**
**daß** die Hohlfasermembrantrennvorrichtung Kappen aufweist, wobei die oberen und unteren mit den Anschlußstutzen versehenen Kappen aus getrennt im Spritzgießverfahren hergestellten Teilen bestehen, daß die Ränder der Kappen durch geeignete Schweiß- oder Klebeverbindungen stumpf und flüssigkeitsdicht mit den glockenförmig nach außen erweiterten Rändern des Gehäuses verbunden sind und die Vergußmasse (50) an ihrem oberen Randbereich eine umlaufende Ausnehmung aufweist, in die ein O-Ring (51) zur Abdichtung des ersten Raums gegenüber dem zweiten Raum eingelegt ist und ein in den mindestens einen Anschlußstutzen des zweiten Raums mündende Durchbruch (53) unmittelbar an die Unterseite des O-Rings (51) anschließt, wobei sich der Ringraum (54) bis an die O-Dichtung (51) erstreckt, so daß kein Totraum vorhanden ist, in dem sich die Luftblasen sammeln können.

2. Hohlfasermembrantrennvorrichtung nach einem der vorhergehenden Ansprüche, **dadurch gekennzeichnet, daß** sich die Anschlußstutzen auf einer Seite befinden, daß die Anschlußstutzen zueinander parallele Mittellinien aufweisen, daß es sich um eine Hohlfasermembrantrennvorrichtung eines Dialysators handelt, daß die Anschlußstutzen zur Konnektierung mit den Tüllen eines Dialysegerätes dienen, daß die Anschlußstutzen auf einer Seite befindlich sind und zueinander parallele Mittellinien aufweisen, so daß sie unmittelbar oder durch eine geeignete Vorrichtung dichtend auf Tüllen einer Dialysevorrichtung aufgedrückt werden können..

3. Hohlfasermembrantrennvorrichtung nach einem der vorhergehenden Ansprüche, **dadurch gekennzeichnet, daß** der erste Raum ein Blutraum und der zweite Raum ein Dialysatraum ist, wobei der Blutraum und der die Hohlfaser umgebende Dialysatraum durch die Vergußmasse (50) getrennt ist.

## Claims

1. A hollow fibre membrane separation apparatus having two flow spaces of which a first space, preferably a permeate space, is formed by the tube passages or capillary tube passages of a hollow fibre bundle moulded in a casting compound at its ends, and a second space, preferably a filtrate space, is formed by a housing encompassing the hollow fibre bundle, said second space being sealed by the casting compound (50) with respect to the inlets and outlets of the tubes of the hollow fibre bundle; and
having at least two connector stubs for supplying and removing liquids into or from each of the two spaces, of which the at least one connector stub of the second space opens in an annular space (54) formed between the housing and the region of an end of the hollow fibre bundle,
**characterised in that**
the hollow fibre membrane separation apparatus has caps, with the upper and lower caps provided with the connector stubs comprising parts manufactured separately in an injection moulding process; **in that** the edges of the caps are connected by suitable weld connections or adhesive connections in a blunt and liquid-tight manner to the edges of the housing expanding outwardly in a bell shape and the casting compound (50) has a peripheral cut-out at its upper edge region into which cut-out an O ring (51) is inserted for sealing the first space with respect to the second space and an aperture (53) opening into the at least one connector stub of the second space directly adjoins the lower side of the O ring (51), with the annular space (54) extending up to the O seal (51) so that no dead space is present in which the air bubbles can collect.

2. A hollow fibre membrane separation apparatus in accordance with one of the preceding claims, **characterized in that** the connectors stubs are located at one side; **in that** the connector stubs have mutually parallel centre lines; **in that** it is a hollow fibre membrane separation apparatus of a dialyser; **in that** the connector stubs serve the connection to the spouts of a dialysis machine; **in that** the connector stubs are located at one side and have mutually parallel centre lines such that they can be pressed sealingly by a suitable apparatus onto spouts of a dialysis apparatus.

3. A hollow fibre membrane separation apparatus in accordance with one of the preceding claims, **characterised in that** the first space is a blood space and the second space is a dialysate space, with the blood space and the dialysate space surrounding the hollow fibre being separated by the casting compound (50).

## Revendications

1. Dispositif de séparation ayant une membrane de fibre creuse comprenant deux compartiments d'écoulement, dont un premier compartiment, de préférence un compartiment à perméat, est formé par les passages de tubes ou de tubes capillaires d'un faisceau de fibres creuses moulé à ses extrémités dans un composé d'enrobage et un second compartiment, de préférence un compartiment à filtrat, est formé par un boîtier entourant le faisceau de fibres creuses, le second compartiment étant rendu étanche par rapport aux entrées et aux sorties des tubes du faisceau de fibres creuses par le composé d'enrobage (50), et
comprenant au moins deux tubulures de raccordement pour permettre l'entrée et la sortie de liquides dans ou de chacun des deux compartiments, dont l'au moins une tubulure de raccordement du second compartiment débouche dans un compartiment annulaire (54) formé entre le boîtier et la zone d'une extrémité du faisceau de fibres creuses,
**caractérisé en ce que**
le dispositif de séparation ayant une membrane de fibre creuse présente des capuchons, les capuchons supérieur et inférieur pourvus des tubulures de raccordement étant constitués de pièces fabriquées séparément par moulage par injection, **en ce que** les bords des capuchons sont raccordés bout à bout et étanches aux liquides aux bords du boîtier élargis vers l'extérieur en forme de cloche par des assemblages soudés ou collés et le composé d'enrobage (50) présente dans sa zone de bord supérieure un évidement périphérique, dans lequel un joint torique (51) est placé pour rendre étanche le premier compartiment par rapport au second compartiment et une ouverture (53) débouchant dans l'au moins une tubulure de raccordement du second compartiment est directement adjacente à la face inférieure du joint torique (51), le compartiment annulaire (54) s'étendant jusqu'au joint torique (51) de sorte qu'il n'y a aucun espace mort dans lequel des bulles d'air peuvent s'accumuler.

2. Dispositif de séparation ayant une membrane de fibre creuse selon l'une des revendications précédentes, **caractérisé en ce que** les tubulures de raccordement se trouvent d'un côté, **en ce que** les tubulures de raccordement présentent des lignes médianes parallèles les unes par rapport aux autres, **en ce qu'**il s'agit d'un dispositif de séparation ayant une membrane de fibre creuse d'un dialyseur, **en ce que** les tubulures de raccordement servent au raccordement avec les douilles de raccord d'un appareil de dialyse, **en ce que** les tubulures de raccordement se trouvent d'un côté et présentent des lignes médianes parallèles les unes par rapport aux autres, de sorte qu'elles peuvent être appliquées directement ou par le biais d'un dispositif adapté sur des douilles de raccord d'un dispositif de dialyse de manière étanchéifiante.

3. Dispositif de séparation ayant une membrane de fibre creuse selon l'une des revendications précédentes, **caractérisé en ce que** le premier compartiment est un compartiment de sang et le second compartiment un compartiment de dialysat, le compartiment de sang et le compartiment de dialysat entourant les fibres creuses étant séparés par le composé d'enrobage (50).
